## Europäisches Patentamt
## European Patent Office
## Office européen des brevets

(11) Publication number: **0 004 190**

**A1**

(12) **EUROPEAN PATENT APPLICATION**

(21) Application number: **79300361.7**

(22) Date of filing: **09.03.79**

(51) Int. Cl.²: **H 01 S 3/13**
**H 01 S 3/03**

(30) Priority: **13.03.78 US 885839**
**13.03.78 US 885838**

(43) Date of publication of application:
**19.09.79 Bulletin 79/19**

(84) Designated contracting states:
**DE GB NL**

(71) Applicant: **XEROX CORPORATION**
**Xerox Square**
**Rochester New York 14644 (US)**

(72) Inventor: **Dunn, Philip D.**
**511 South Dawley Ave.**
**West Covina California 91790 (US)**

(72) Inventor: **Hamerdinger, Randolph W.**
**7453 Thronhurst**
**Glendora California 91740 (US)**

(72) Inventor: **Hug, William F.**
**2021 E. Oakdale Street**
**Pasadena California 91107 (US)**

(72) Inventor: **Johnson, Richard C.**
**1205 E. Woodbury Road**
**Pasadena California 91104 (US)**

(72) Inventor: **McQuillan, Robert C.**
**405 W. Virginia Avenue**
**Glendora California 91740 (US)**

(72) Inventor: **Marlett, Calvin J.**
**2457 Laughlin Street**
**La Crescenta California 91214 (US)**

(72) Inventor: **Reed, Edwin A.**
**1092 W. 17th Street**
**Upland California 91786 (US)**

(74) Representative: **Goode, Ian Roy et al,**
**c/o Rank Xerox Limited Patent Dept. Westbourne**
**House 14-16 Westbourne Grove**
**London W2 5RH (GB)**

(54) **A gas laser.**

(57) A gas laser in which the gas pressure is actively controlled by releasing gas from a high pressure reservoir (150) when the gas pressure is less than a predetermined value. The laser described is an internal mirror helium-cadmium laser discharge tube (10). Pressure control is accomplished by providing a signal representing the sensed pressure of the helium in the laser discharge tube (10) and comparing electronically this signal with a signal representing the pressure of helium at a reference pressure. If the sensed pressure is lower than the reference pressure, indicating a loss of helium gas, a heating element (162) is operated to heat a temperature-sensitive gas-permeable membrane (154). When heated, the membrane allows the helium in the high-pressure reservoir to leak into the laser tube until the sensed pressure is substantially equal to the reference pressure.

EP 0 004 190 A1

./...

**FIG. 1**

## A GAS LASER

This invention relates to a gas laser, and in particular, to an internal mirror helium-cadmium laser discharge tube.

Metal vapor laser discharge tubes, although commercially available, have been less than satisfactory when utilized in a machine application. This is particularly so in the cadmium ion laser that employs helium as an auxillary gas, the cadmium ion laser emitting light at either 4416A in the blue region of the spectrum or at 3250A in the ultraviolet region of the spectrum and being capable of producing a continuous wave or pulsed output with modest discharge currents.

Degradation of the radiant output to an unacceptable level is the usual definition of the laser tube failure. In turn, the intensity of the output radiation varies with the helium and cadmium pressure and the type and concentration of impurities within the tube. The mechanisms for degradation failure in helium-cadmium laser tubes are therefore related to depletion of the helium or cadmium supply or accumulation of impurities in the tube.

Depletion of the helium supply is, it is believed, usually a result of permeation through the tube seals and glassware, and trapping by the cadmium condensate. In a typical helium-cadmium laser tube with a consumable cadmium supply, permeation rates may be 0.24 millitorr/hour and helium trapping (or gettering) rates by condensing cadmium may be as high as 38 millitorr/hour.

The sources of impurities in laser tubes are both internal and external. Impurities such as hydrogen will increase the conduction and convection cooling losses from the discharge in the capillary bore and thereby cause alteration of the excited state population

-2-

distribution in the discharge and the laser output. Water vapor impurities generally dissociate in the tube with the oxygen causing oxidation of the cadmium supply and metal structural components. The residual hydrogen from the dissociation adds to the other sources of hydrogen to cause cooling of the discharge. Internal sources of impurities include absorbed and occluded water vapor and noncondensable gases in the glass walls and structure, evaporated or sputtered electrode or other structural materials, and other internal contaminants resulting from improper cleaning or handling of parts prior to assembly. Suppression or elimination of these impurity problems necessitates that the tube be capable of bake-out at high temperatures (350° to 400°C) since the contamination problems of most concern are internal to the tube. In those laser tubes using epoxy seals to seal the tube ends, external sources of contamination, generally water vapor and hydrogen, may enter the tube through the seals, an epoxy seal being very porous. Many or all of the mechanisms for degradation failure exist in present commercial laser tubes whether in operation or during storage (shelf-life).

The above deficiencies in the prior art metal ion laser discharge tubes have caused a limited acceptance of these tubes in the laser industry. An important use of a helium-cadmium laser, for example, would be in laser reading/writing systems wherein the blue output of the laser can be effectively utilized as one component of a laser beam which scans (reads) an input document or as a writing beam to write (print) information on a medium sensitive to the blue laser light such as a photoconductor.

- 3 -

An improved helium-cadmium laser tube is diclosed in copending US Patent Application Serial No 823,553, assigned to the assignee of the present invention. Although the helium-cadmium laser disclosed therein has provided excellent performance, it has been determined that an active control technique for compensating for helium loss would be desirable. Further, certain laser tube design modifications were determined to be desirable in order to increase the efficiency of the laser while reducing its complexity and cost.

The gas laser of the present invention is intended to overcome this degradation problem, and is characterised by the provision of a controllable source of gas for releasing the gas into the laser so as to increase the pressure in the laser in response to a fall in pressure therein below a predetermined pressure.

By maintaining the gas pressure at a satisfactory level, the invention provides the advantages of an economical, compact laser which has a relatively long operating and shelf life.

- 4 -

Specific embodiments of the invention will now be described by way of example and with reference to the accompanying drawings in which:

Figure 1 is a cross-sectional view of the metal vapor laser discharge tube of the present invention;

Figure 1A illustrates an alternative arrangement for the helium pressure regulator;

Figure 2 is a cross-sectional view of the laser tube shown in Figure 1 along line 2-2 in a direction indicated by the arrows;

Figure 3 is an enlarged cross-sectional view of part of the laser discharge tube showing the cathode end of the main discharge capillary;

Figure 4 is an end section along line 4-4 of Figure 3;

Figure 5 illustrates the voltage feedback circuit which may be utilized to control the metal vapor pressure, and the control of the laser discharge tube current; and

Figure 6 is a schematic diagram of the preferred circuit for actively controlling the helium pressure within the laser discharge tube shown in Figure 1.

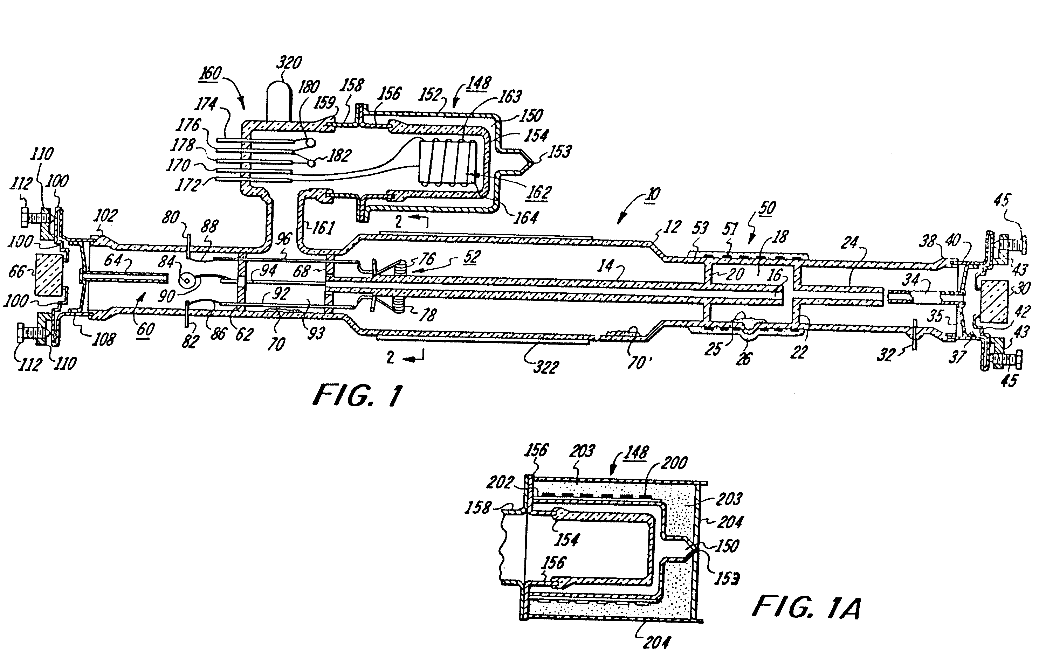

Referring now to Figure 1, the metal vapor laser tube 10 which comprises the present invention is shown. The tube comprises a glass envelope 12 with glass main discharge capillary tube 14 having a bore 16 supported therewithin. A large volume metal-containing reservoir 18 is formed by glass baffle 20 hermetically sealed to the inner wall of envelope 12 and the disc shaped base portion 22 of cataphoretic confinement capillary tube 24. Baffle 20 also serves to support the discharge capillary tube 14 within envelope 12. The reservoir volume, typically 20 $cm^3$, is capable of containing a sufficient metal charge 25 to provide extended operating life times. For a helium-cadmium laser, 10-15 grams of cadmium are inserted in reservoir 18 via tubulation 26 prior to tube operation. It should be noted that all glassware described with reference to the laser discharge tube 10, except for the laser mirror substrate, is preferably made of glass such as Corning 7052 glass. Glass capillary tube 24, adjacent to and coaxial with discharge capillary tube 14, provides cataphoretic confinement of the cadmium vapor in reservoir 18 and primary protection of anode end mirror 30, described in more detail hereinafter.

An anode pin electrode 32, preferably made of Kovar, a conventional iron cobalt-nickel alloy, is positioned within laser discharge tube 10 and adjacent the end of glass capillary tube 24. A diffusion confinement capillary tube 34, preferably made of metal such as Kovar, is formed on the other side of anode pin 32 and is coaxially aligned with tube 24. Tube 34, in conjunction with tube 24, minimizes the amount of cadmium vapor in the region of mirror 30. The tube 34 is supported by a disk shaped metal flange member 35, downwardly extending portions, or tabs, 37 thereof being attached to flange 40. The flared end portion 38 of tube 12 is also sealed to metal flange member 40 by standard glass to-metal fusing techniques. An apertured flange member 42 is welded to flange member 40 and the high temperature spherical resonator mirror 30, comprising a glass substrate and a plurality of dielectric reflecting layers is hard
sealed to the laser tube body by the techniques described,
for example, in copending US Patent Application Serial No 552396
filed February 24, 1975. An extended adjustment flange
43 is sealed to flange 42 and contains a plurality of
adjusting screws 45 to allow mirror 30 to be adjusted
for alignment pruposes if necessary. An arrangement
which may be utilized for this adjustment is disclosed
in copending US Patent Application Serial No 850314 filed November 10, 1977, and assigned to the assignee of the present
invention, the relevant portions of which are incorporated
herein by reference.

The laser tube described in copending US Patent Application Serial No. 552,396 comprises a laser mirror sealed
to each end of the laser tube, the seal withstanding
relatively high temperature utilized to remove contaminants from the laser tube during fabrication thereof,
the sealant also minimizing gas permeation therethrough
during the laser tube utilization. This assembly is
fabricated by first preparing an apertured recessed metal
flange member. A slurry, comprising a glass frit and
carrier, is introduced into the metal flange members
placed in a first portion of a fixture and a glass substrate having a reflecting layer coated thereon is positioned
adjacent the flange member recess with the reflecting
member being at least coextensive to that with the aperture.
The weighted second portion of the fixture contacts the
non-reflecting side of the substrate to ensure that the
glass substrate reflecting layer is in contact with the
surface of the metal flange member via the dried slurry.
The fixture is placed in an oven, the temperature thereof
being increased to the fritting temperature of the glass
frit for a predetermined time period, the oven thereafter
being slowly cooled. The glass substrate is now hard-
sealed to the metal flange member, forming the aforementioned assembly, the assembly being joined to a mating flange formed on the laser tube. The reflecting layer
is selected to withstand the fritting temperature with
minimal optical and mechanical changes, and the glass
substrate is selected to retain its mechanical dimension
during and after thermal cycling to the fritting temperatures. The glass substrate, the sealant mixture
and the metal flange member are selected to have closely
matched coefficients of thermal expansion to minimize
seal leakage during the laser tube operation. Thus,
there is provided a hard glass frit seal which substantially
eliminates gas permeation therethrough. The operation
and fabrication of this glass frit seal is more specifically defined in the aforementioned pending U.S. Serial
No. 552,396, filed February 24, 1975.

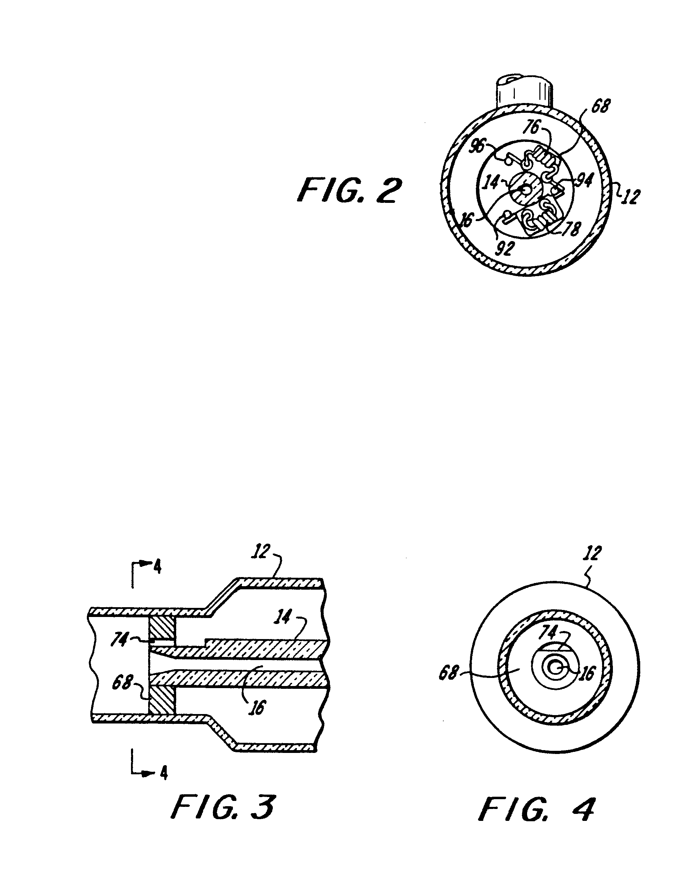

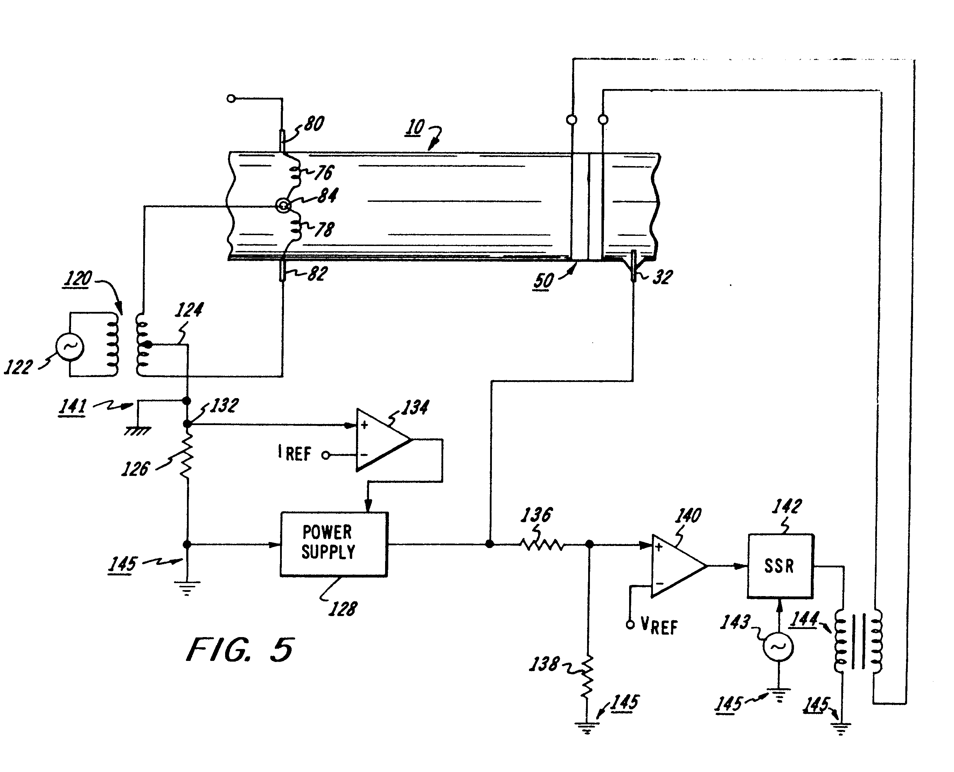

A resistive heater 50 comprising a plurality
of coils 51 is wrapped around the tube envelope 12 adjacent
reservoir section 18 and within insulating layer 53 for
controlling the cadmium vapor pressure and is utilized
in conjunction with a tube voltage detection circuit
(described with reference to Figure 5) to detect the
discharge voltage between anode 32 and cathode structure
52 for maintaining a substantially constant laser output
independent of ambient environment temperatures. The
ends of the heater coils are terminated in appropriate
connectors to allow the heater 50 to be connected to
a transformer as disclosed hereinafter. On the cathode
end section of laser tube 10 is provided a diffusion
confinement section 60 having an apertured glass baffle
62 and metal (preferably Kovar) diffusion confinement
capillary tube 64 which allows only a vanishingly small
amount of cadmium vapor to be in the vicinity of
a cathode end mirror 66. A glass baffle 68 is provided
(shown in more detail in Figures 3 and 4) adjacent the
cathode end of the discharge capillary 14 and effectively
acts to separate the cadmium condensate 70 from the electric field at the cathode structure 52 (as set forth
hereinafter, the cathode structure 52 comprises two
cathodes, one of which is utilized for tube operation,
the other acting as a spare) to prevent the trapping,
or gettering of helium gas by the cadmium which would
otherwise occur. It should be noted that this anti-
gettering effect provided by baffle 68 allows the cadmium
to condense anywhere on the inside wall of envelope 12
between baffles 62 and 68 and be removed from the gas
mixture flowing from the bore 16 of main discharge capillary 14.

Referring to Figures 3 and 4, a chamfered
section 74 is provided in the cathode end of discharge
capillary 14 to allow the discharge exiting capillary
discharge tube 14 access to cathode structure 52. The
laser tube cathode structure 52, shown in cross-sectional
view in Figure 2, comprises two resistive heated barium
strontium oxide cathodes 76 and 78, one of which functions
as a spare, mounted to external pins 80, 82 and 84 for
connection to transformer 120 (Figure 5) via nickel leads
88, 86 and 90 and pins 96, 92 and 94, (made of Kovar),
respectively.

High temperature flat resonator mirror 66,
comprising a glass substrate and a plurality of dielectric
reflecting layers, is hard sealed to apertured metal
flange member 100 utilizing the techniques described
in the aforementioned US copending application 552396. As is set
forth in the copending application, by forming a glass
seal between the mirror substrate and the apertured metal
flange member, the laser tube 10 can be subjected to
the high bake-out temperatures required for removing
tube contaminants without destroying the glass seal.
The flared portion 102 of envelope 12 is sealed to a
metal flange member 108 by standard glass to metal sealing
techniques and the laser end mirror assembly, comprising
mirror 66 and flange member 100, is inert gas welded to flange member 108. An extended adjustment flange 110 is sealed to flange 100, and contains a plurality of adjusting screws 112 to allow mirror 66 to be adjusted. This type of arrangement is disclosed in copending US Patent Application Serial No 850314. The joining of laser end mirror assemblies (mirror 30 and flange 42 and mirror 66 and flange 100) hermetically seals the laser discharge tube 10 and provides the optical laser cavity required for lasing action.

Figure 5 illustrates in a simplified representation apparatus for controlling the current in the laser discharge tube 10 and for controlling the voltage applied to the input leads of heater 50 to maintain substantially uniform cadmium vapor density within the tube 10. In essence, cathodes 76 and 78 are coupled to feed through pins 80, 82 and 84 in a manner described hereinabove, feed through pin 84 being common to both cathodes. In the embodiment shown, cathode 78 is the cathode selected to be utilized, the output of feed through pins 82 and 84 being coupled to the secondary of transformer 120. The input terminals of the transformer 120 are coupled to a source of voltage 122. As set forth previously, the system is provided with two cathodes 76 and 78 one of which is utilized initially, the other one acting as a spare to be utilized if the primary cathode electrode breaks down. Transformer 120 acts as the heater source for the cathodes 76 and 78 by supplying ac potential across the selected cathode. The selected cathode is also utilized to provide a return path for the dc current in the discharge tube. In other words, the discharge at the selected cathode (78 in the embodiment shown) causes a dc current to be induced in the cathode. The induced dc current is reflected as a dc current through the leads of the secondary of transformer 120. The dc current is summed in the secondary center tap 124 of the transformer 120. Resistor 126,
which typically may be 10 ohms, forms a return path to
a voltage power supply 128 and provides an indication
of the current through the laser discharge tube 10.
In order to maintain the laser discharge current at the
desired value, the current is sensed at tie point 132
and coupled to one input of an operational amplifier
134, a reference current $I_{REF}$ supplied to the other input
of operational amplifier 134 being compared thereto.
If the reference current is less or greater than a desired value (100 ma for example) the output of the operational amplifier 134 adjusts power supply 128 such
that the desired current is attained. The output of
power supply 128 is connected to anode 32 to complete
the discharge path of laser tube 10 and is also supplied
to a voltage divider circuit comprising resistors 136
and 138 which are utilized to measure the voltage drop
across laser tube 10. The tube voltage drop is a measure
of the cadmium vapor pressure in the laser tube 10.
Since it is desired to maintain this pressure at a des-
ired value      ($10^{-2}$ Torr, for example) the change of
voltage across resistor 138 will provide an indication
of cadmium vapor pressure since the tube voltage drop
is inversely proportional to cadmium vapor pressure.
This signal is applied to the non-inverting input of
operational amplifier 140 and compared with a voltage
reference $V_{REF}$ applied to the inverting terminal of
operational amplifier 140. If the pressure is less than
the desired value, as determined by the value of $V_{REF}$,
a solid state relay 142 is energized which causes a
voltage from source 143 to be coupled to the primary
of transformer 144, the secondary output terminals being
coupled to heater 50. When the pressure is less than
desired, the voltage drop across resistor 138 increases,
causing a positive voltage differential to appear at
the input to operational amplifier 140, the output thereof energizing relay 142. Additional cadmium in the cadmium reservoir 18 is caused to be vaporized, thereby increasing the cadmium vapor pressure, decreasing the voltage drop and thereby reducing the voltage differential at the input to operational amplifier 140 to be substantially zero, the relay 142 being deenergized. This removes source 143 from the transformer 144 and thereby deactivating heater 50. The diagram of Figure 5 also shows a chassis ground 141 and circuit grounds 145. The above is a simplified description of the cadmium vapor pressure control. It should be noted, however, that a time proportional controller along with appropriate lead-lag circuitry can be utilized to substantially improve tube voltage (cadmium vapor pressure) regulation.

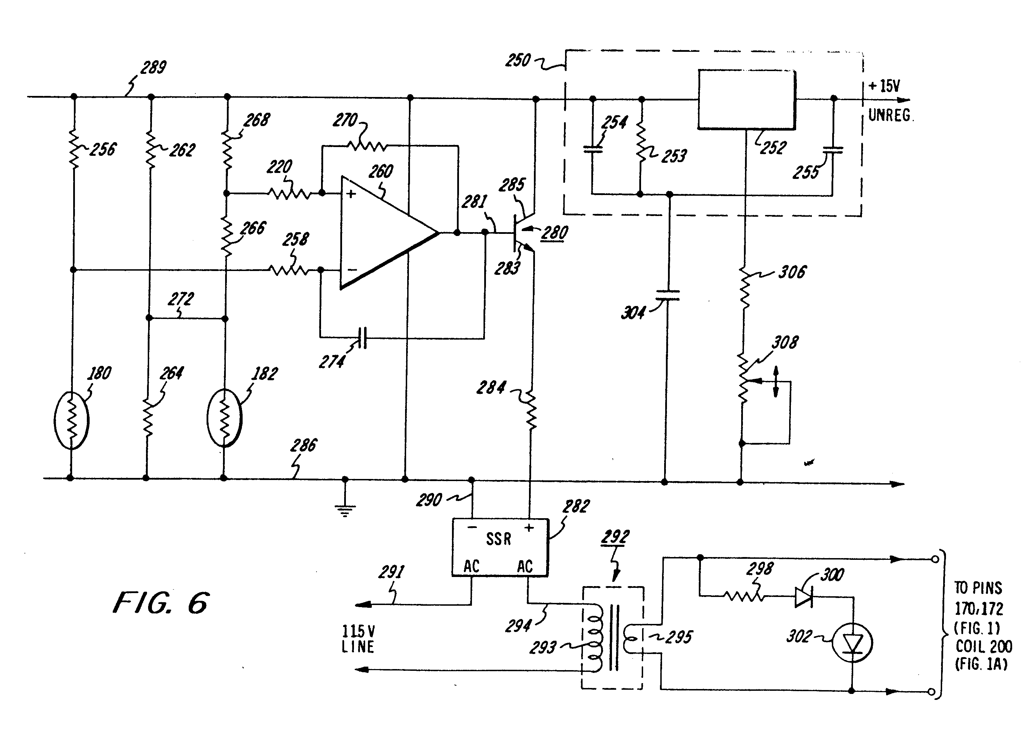

As set forth hereinabove, a major cause of failure or limited life of a gas laser tube wherein helium is a constituent gas, such as the helium-cadmium laser of the present invention, is the loss of helium pressure within the gas envelope 12 due to various causes, including permeations through the outer tube walls, condensate trapping or ion implantation into the discharge capillary walls or the cathode. Although typical prior art devices may compensate for helium loss in laser tubes by providing a large helium reservoir, which is directly open to the laser tube to allow additional helium gas therein to flow into the main tube body to reduce the rate of change of laser tube pressure, this procedure is not sufficient to provide accurate control of the helium tube pressure over extended periods of time. Further, although the helium pressure tube implant control technique disclosed in the aforementioned copending US application Serial No. 823,553 provides improved results over the prior art, a more accurate control of helium pressure is desired. In accordance with one aspect of the present invention, a system is provided wherein the helium tube pressure is actively controlled by continuously sensing and adjusting the helium pressure in the laser
discharge tube. Referring to Figure 1, a helium pressure
regulator 148 is provided to actively control the helium
pressure in the laser tube 10. A high pressure helium
reservoir 150 comprises a metal outer member 152, a
permeable membrane 154, preferably formed of a permeable
glass membrane such as Corning 7052 glass wherein the
helium permeation rate therethrough is strongly temperature dependent, and high pressure helium (typically
$He_3$) at 2 atmospheres which is introduced into reservoir
150 via tubulation 153. Membrane 154 is fused to flange
member 156 by standard sealing techniques, metal member
152 also being sealed to flange member 156 as shown.
An extension, or appendage 160, preferably comprising
Corning 7052 glass and connected to the main tube envelope 12 via tube portion 161, is joined to flange 156
via flange 158 which is in turn sealed to the flared
end 159 of appendage 160. A membrane heater 162 comprising a heater wire 163 surrounding a heat insulting
support member 164 is supported adjacent membrane 154
as shown (it should be noted a source of heat may be
applied directly to metal portion 152 in lieu of separate
heater 162). When current is supplied to the heater
wire 163 in a manner described hereinbelow, the heat
generated thereby is sufficient to heat membrane 154
and cause the high pressure helium contained in the
reservoir formed by the metal portion, or cover 152,
and flange 156 to permeate through membrane 154 at a
predetermined rate greater than the rate caused by ambient
temperature or other heat effects generated within the
laser tube 10 such as the heat generated by the tube
discharge, conventional radiation and convection effects
etc. The heater leads are connected to feed through
pins 170 and 172 as shown which are in turn connected
to an external control circuit which will be described
hereinafter with reference to Figure 6. Three additional feed through pins 174, 176 and 178 are provided. Coupled
to pins 174 and 176 is thermistor 180 and coupled to
feed through pins 176 and 178 is thermistor 182. In
the embodiment shown, both thermistors are placed within
the appendage 160 although the system would be operative
if one of the thermistors was sealed to the outside wall
of appendage 160 and connected to the appropriate position
in the electrical circuit.

Thermistors, in general, describe an electrical
component which may be a semiconductor material normally
having a resistance characteristic which is inversely
dependent on the temperature thereof. For example, as
the temperature of a thermistor increases, its resistance
decreases. As will be set forth hereinbelow with respect
to the circuitry of Figure 6, thermistors 180 and 182
are connected in a bridge type circuit in a manner whereby
the influence of ambient temperature changes are nulled,
thus allowing the sensitive measure of pressure within
the low pressure helium section (pressure within laser
discharge tube 10, not the pressure of the helium in
reservoir 150) utilizing one of the thermistors. In
this regard, thermistor 180 is loaded by the circuitry
of Figure 6 with a relatively large current wherein it
acts as an active circuit member and is influenced directly
by the pressure of the low pressure helium gas within
the appendage 160 whereas thermistor 182 is loaded by
a much smaller current in a manner wherein the effects
of the pressure on its resistance is negligible. As
is well known in the prior art, helium gas is essentially
a good conductor of heat, the rate of conductance thereof
being proportional to its gas density or pressure. The
loss of low pressure helium as the tube ages decreases
the pressure sensed by thermistor 180 below the nulled,
or compensated value determined by ————————————————
the thermistors 180 and 182. As the pressure or gas density of the helium decreases, the rate of heat loss
from the active thermistor 180 into the helium gas is
decreased, the resistance of the thermistor decreasing.
This causes a change in a voltage applied across the
active thermistor 180 and causes the heater 162 to be
energized, heating membrane 154 and increasing the per-
meation rate of the high pressure helium from reservoir
150 into the main body of the laser tube 10 to compensate
for the decrease in pressure due to helium loss. As
set forth hereinbelow, only the active thermistor 180
acts as a pressure sensitive device and the ambient
temperature effects are compensated for by both the
passive thermistor 182 and active thermistor 180. When
the laser is turned off, the laser tube is at ambient
room temperature, the permeable membrane 154 being selected
such that the helium permeation from the high pressure
reservoir 150 into the lower pressure section (initially
from the internal area of helium pressure regulator 148
and thereafter diffusing into appendage 160 and the main
portion of laser discharge tube 10 via section 161) is
negligible. Although when the laser tube is turned on,
the permeable glass membrane 154 is heated by convection,
conduction and radiation losses from the gas discharge
which allows leakage of the helium into the low pressure
section, this passive type of regulation, although sufficient
for some purposes, does not provide the accurate constant
control of laser output power which is required in many
applications using helium-cadmium lasers. Therefore,
active control of membrane heater 162 is the desired
approach. As set forth above, one thermistor may be
interior to the low pressure section and the other thermistor can be fastened to its exterior and in substantial
thermal communication with the interior thermistor such
that the two thermistors respond together through any
change in ambient temperature in a manner wherein the
influence of ambient temperature changes on the pressure

-15-

sitive thermistor 180 are effectively nulled out.
However, it has been determined that when using an exterior thermistor, the temperature affects thereon by
the glass to which it is coupled i.e., through convection,
the radiation affects of the heated discharge, makes
the nulling effect more difficult to attain.  Other
techniques can be utilized to sense the pressure within
the low helium pressure section such as by utilizing
a Pirani gage.  Although utilization of the Pirani type
gage does provide an accurate measure of pressure (temperature) within the low pressure helium section, the
gage is a relatively expensive component and would increase the manufacturing cost of the laser discharge
tube 10.  The thermistors, in contradistinction thereto,
are relatively inexpensive devices and provide an accurate
indication of helium pressure.

The helium is leaked from the high pressure
reservoir 150 into the lower pressure section of the
laser discharge tube 10 via glass section 161 at a rate
at least equal to the helium loss from the laser discharge tube 10.  When the laser discharge tube 10 is
off, very little helium leakage occurs.  When the laser
tube 10 is turned on, the tube heats up and helium loss
begins to occur by leakage from the laser tube envelope,
some trapping by the cadmium condensate and by other
means.  At the same time, the permeable membrane 154
under active control, provides the primary helium compensation mechanism although some control is provided
by the effects of the heat generated by the tube dis-
charge itself.

Figure 1A shows an alternative embodiment of
the helium pressure regulator 148 of the present invention
(like reference numerals in Figures 1 and 1A identifying
identical elements).  In this embodiment, the internal
heater element 162 is eliminated and replaced with an
essentially external heating arrangement comprising a plurality of metal (nichome) strips 200 wrapped around
a dielectric or insulating layer 202, the metal coil
arrangement in turn being embedded in a layer of insulating material 203, such as Fiberfrax, manufactured by
the Carborundum Company, Niagra Falls, New York. A
fiberglass sleeve 204 is provided to enclose the underlying structure for protection and heat insulation purposes. Although not shown, the coils 200 are coupled
to leads which have been inserted·through sleeve 204
and insulating layer 200 and in turn coupled to the
circuitry to be described with reference to Figure 6.
In this embodiment, feed through pins 170 and 172 are
not required although for manufacturing purposes they
are generally included since a six pin stem press is
readily available commercially. As described with re-
ference to Figure 1, the assembled helium pressure regulator
148 is affixed to flange member 158 of appendage 160.

The schematic circuit for controlling the
helium tube pressure is shown in Figure 6 and will now
be described. A source of unregulated 15 volts (not
shown) is applied to a regulator circuit 250 which comprises voltage regulator chip 252, resistor 253 and
stability providing capacitors 254 and 255. The regulator circuit 250 converts the 15 volts unregulated
dc potential applied thereto into a regulated voltage
of approximately 10 volts dc. The regulated output is
applied across resistor 256 one terminal of which is
connected to pressure sensor thermistor 180 as shown.
The tie point between resistor 256 and thermistor 180
is coupled via resistor 258 to the inverting input of
operational amplifier 260. The ten volt regulated output
is also shunted by the series connection of resistors
262 and 264. A resistor 266 is coupled to the tie point
of resistor 268 and resistor 220, resistor 220 being
the input resistor to the non-inverting input for operational amplifier 260. The output of operational

amplifier 260 is fed back to the input thereof via feed-back resistor 270. Resistor 266 is connected to thermistor 182, functioning only as a temperature sensor, resistor 262 and resistor 264 via lead 272. A capacitor 274 is provided between the output and input of operational amplifier 260 to reduce the frequency response thereof to reduce the effects of noise on the operation of amplifier 260. The output of operational amplifier 260 is connected to the base electrode 281 of NPN transistor 280, the emitter electrode 283 thereof being coupled to the positive input of a solid state relay 282 via resistor 284. The collector electrode 285 of transistor 280 is connected to the regulated voltage line 289. The negative input of solid state relay 282 is coupled to the circuit common 286 via lead 290. An ac terminal of relay 282 is coupled to an ac 115 volt source via lead 291, the other ac terminal being coupled to the primary winding 293 of a step down transformer 292 via lead 294, the secondary terminal winding 295 thereof being connected across resistor 298, diode 300 and light emitting diode 302. The output appearing across the secondary winding 295 of transformer 292 is also applied to the helium heater 162 via feed through pins 170 and 172 as shown in Figure 1 or to the leads connected to the heating coil 200 of the Figure 1A embodiment. Elements 253, 254 and 255 of regulator 250 are coupled to common 286 via ripple reducing capacitor 304 and also coupled to common 286 via resistor 306 and adjustable resistor 308. Adjustable resistor 308 enables the desired helium pressure value to be attained.

Both thermistors 180 and 182 are supplied current from regulated voltage source 250 and through individual current limiting resistors 256, 268 and 266. The resistance value of resistors 262 and 264 are choosen such that the temperature voltage characteristics of thermistors 180 and 182 are substantially matched over a selected temperature range (for example, 60°F to 120°F)
whereby substantially equal input voltages are applied
to resistors 220 and 258 (these voltages essentially
appear at the inputs of operational amplifier 260 since
the voltage drops across resistors 220 and 258 are relatively
small) at the nominal operating helium pressure within
laser discharge tube 10. The thermistor voltage drops
are compared by operational amplifier 260, the output
thereof being fed to solid state relay 282 via transistor
amplifier 280, the amplifier 280 operating to amplify
the output current of the operational amplifier 260 to
drive solid state relay 282. The relay, when energized,
drives the helium heater 162 via the transformer 292
to enable high pressure helium to leak into the main
body of laser tube 10 as described hereinabove. Light
emitting diode 302 provides a visual indication when
the helium heater 162 is being operated. In order to
set the system circuitry to eliminate tolerance problems
of the laser tube and its associated electronics, the
laser discharge tube 10 is initially filled with helium
at the desired pressure (i.e. approximately 4 Torr)
through tubulation 320. The reference pressure is initially set equal to the sensed pressure by moving the
adjustable tap of resistor 308 until heater 162 turns
on, the tap thereafter being slightly backed off from
this setting. If the helium pressure in the tube 10
drops below the adjusted value when the tube is in operation, the tube is allowed to fill at a predetermined
rate with the high pressure helium from reservoir 150
until the operating pressure is reached at which point
the filling is terminated. The thermistors 180 and 182
are temperature sensitive devices and thus if the temperature within the appendage 160 changes, both thermistors
will react with a substantially zero difference in the
individual voltage drops. However, since both devices
are within the appendage 160, it is desired to have one thermistor sensitive primarily to pressure, and the
other thermistor sensitive primarily to temperature.
In order to provide this function, it is required that
the pressure sensitive thermistor 180 be supplied with
a relatively high current when compared to that supplied
to the passive thermistor 182. Resistor 256 is therefore
selected to provide a high current through thermistor
180 (typically 20ma) whereas resistors 268 and 266 (which
together with thermistor 182 from a compensating circuit)
supply a current through thermistor 182 which is substantially less than the current flowing through thermistor 180 (typically .2 ma). Adjusting the reference
pressure in the manner set forth hereinabove allows the
initial operation of the system to be adjusted such that
the differential input to the operational amplifier 260
is equal to substantially zero although thermistor 180
is heated to a much higher temperature than thermistor
182 due to the heat causing current flowing therethrough.
In other words, thermistors 180 and 182 are arranged
in a null type bridge circuit wherein the difference
in current flowing through the thermistors at ambient
temperature is such that initially no voltage differential
is applied to operational amplifier 260. In this situation,
amplifier 280 is non-conducting and relay 282 is arranged
such that the 115 volt line voltage is not coupled to
transformer 292. As set forth hereinabove, helium gas
is considered a good conductor of heat, the heat conductivity being proportioanl to the helium density (the
number of helium atoms per cubic centimeter). Therefore,
in the initial or equilibrium setting, the voltage on
regulated voltage line 289 is adjusted by adjustable
resistor 308 such that voltage appearing at each input
terminal of operational amplifier 260 is substantially
equal. It should be noted that when the voltage on line
289 is adjusted in magnitude in one direction (i.e. a
higher or lower voltage from an initial value) the voltage drop across thermistor 132 will follow that voltage direction whereas the voltage drop across thermistor 180 will initially follow the voltage direction on line 289 but subsequently (due to its current heating) will change in the opposite direction. Therefore, adjustment of resistor 308 should be made carefully such that the inputs to operational amplifier 260 are substantially equal. However, when there is a loss of helium gas, and since thermistor 180 is heated by the current therethrough to a much greater degree than thermistor 182, the change in helium pressure (or gas density) causes the heat loss from the thermistor 180 to the helium gas to be much greater than that from thermistor 182. When the helium pressure is decreased, the amount of heat loss decreases from the thermistor 180, the temperature increases, its resistance decreases and the voltage drop across thermistor 180 decreases and the negative differential input appears at the input to operational amplifier 260, the positive output thereof driving transistor 280 on. Operational amplifier 260 is preferably arranged to be either "on" or "off", toggle resistor 270 forcing the switching to occur when the voltage difference at the inputs to operational amplifier 260 approaches zero. In other words, a predetermined voltage difference is necessary to cause switching to occur to inhibit noise and slight current drifts from causing premature switching. In particular, toggle resistor 270, in conjunction with the adjustment of resistor 308, produces a hysteresis effect wherein the helium pressure must change a predetermined amount (0.5 Torr, for example) before the helium control circuit arrangement shown in Figure 6 will be operative to compensate for helium pressure loss. As set forth hereinabove, this will reduce the effect of noise on switching and also increases reliability of the circuit components. However, the control arrangement will also be operative without toggle resistor 270 when the helium pressure decreases below the initial helium
fill pressure. The "on" or high output of transistor
260 causes relay 282 to switch to an "on" position which
therefore couples the 115 volt line current to transformer 292. The secondary 295 of transformer 292 applies
voltage to the terminals of heater 162 to heat the permeable member 154 (Figure 1 embodiment) and allowing high
pressure helium to leak into the main portion of laser
discharge tube 10 at a rate determined by the properties
of the membrane glass (permeability as a function of
the membrane temperature) and the heat generated by the
heater 162 (in the Figure 1A embodiment, the secondary
295 of transformer 292 applies voltage to coils 200).
Since the current applied to the heating coils is constant, the heat emitted thereby is substantially constant
and is radiated at a substantially constant rate. As
the helium pressure in the main portion of the discharge
tube 10 increases, the heat loss from thermistor 180
to the helium gas increases, the temperature of the
thermistor decreases, its resistance increases and the
voltage drop thereacross increases and reaches a steady
state value at which time the voltages at the input ter-
minals to operational amplifier 260 are substantially
equal. The output of amplifier 260 is insufficient to
maintain transistor 280 on. With transistor 280 off,
no current is supplied to the positive terminal of relay
282 and the relay is switched such that the 115 volt
line voltage is not applied to transformer 292. The
heater 162 of Figure 1 (or the heater coils 200 of Figure
1A) is therefore turned off and leakage of high pressure
helium to the main portion laser tube 10 is substantially
reduced (some leakage will occur due to the temperature
of the discharge, convection and radiation losses etc.).
It should be noted that thermistor 182 will only be
slightly affected by helium pressure since it generates
almost no heat of its own. This fact allows thermistor 182 to be placed within the laser tube near thermistor 180. Since the two thermistors are operating at different currents, it follows they will have different internal temperatures, thermistor 180 at approximately 150°C and thermistor 182 at a temperature slightly higher than the helium temperature which corresponds to ambient temperature.

With this technique, it is possible to maintain the helium pressure within the laser discharge tube 10 at a desired value throughout the laser life time which may exceed 10,000 hours. The helium pressure can be maintained to within .3 to .4 Torr over a specified operating temperature range, for example, 60°F to 120°F. Since there will be variations in thermistor characteristics, operational amplifiers tube pressures, and system electronics, a means of adjusting the circuit "balance" is required. As set forth hereinabove, by adjusting the voltage on line 289 by means of adjustable resistor 308 such initial circuit balance can be attained which sets the reference pressure equal to the sensed pressure. The heat generated by heater 162 (or by heating coils 200) does not effect the operation of the device to any great degree. However, heat baffles can be provided in the system to shield thermistors 180 and 182 from this heat if further accuracy is required.

Typical values for the principal elements shown in Figure 6 are as follows:

        256 = 300 ohms
        262 = 30 K ohms
        264 = 10 K ohms
        268 = 2500 ohms
        266 = 430 ohms
        258 = 10 K ohms
        220 = 10 K ohms
        270 = 4.7 Megohms
        274 = .002 microfarads

284 = 180 ohms

306 = 160 ohms

308 = 100 ohms

298 = 470 ohms

Typical circuit elements which can be utilized include:

Thermistors 180 and 182 - No. 35A1, 5000 ohms at 25°C manufactured by Victory Engineering Corporation, Springfield, New Jersey.

260 - Model No. 741CG manufactured by Signetics Corporation, Sunnyvale, California.

Transistor 280-2N 2222/3904 manufactured by Motorola Corporation, Phoenix, Arizona.

Solid State Relay 282 Model No. 226Rl-5Al, manufactured by Sigma Corporation, Braintree, Massachusetts.

Regulator 252-LM309H, National Semiconductor Corporation, Mountain View, California.

Transformer 292 - 12.8-2 (12 volts at 6 amperes) Signal Transformer, Inwood, New York.

Although not shown in the figure, it should be clear that alternative techniques can be utilized to sense the helium pressure in appendage 160 instead of thermistors. For example, a Pirani type vacuum gage may be sealed into the low pressure helium section in appendage 160, the helium pressure sensed by the Pirani gage being compared with a signal representing reference pressure.

If the sensed pressure is lower than the reference pressure, a power supply is caused to supply electric current to membrane heater 162 which heats the temperature sensitive permeable membrane 154 and allows helium in the high pressure reservoir 150 to leak into the main portion of the laser tube 10 until the pressure sensed by the Pirani gage is equal to the reference value.

The anode mirror assembly comprises an apertured metal flange 42 having a fully reflecting mirror 30 sealed to metal flange 42. Mirror 30 typically comprises a glass substrate upon which is coated a substantially totally reflecting layer comprising a plurality of dielectric layers, the reflecting layer facing inward (within the tube envelope). The cathode end mirror assembly comprises an apertured metal flange 100 having a partially transmissive mirror 66 sealed to apertured metal flange 100 in a manner as described in the aforementioned copending patent application. Mirror 66 comprises a glass substrate upon which is coated a partially transmissive layer of dielectric material, the transmissive layer being positioned within tube envelope 12. Mirrors 30 and 66 are appropriately coated with layers of dielectric material such that only a laser beam of a desired wavelength (i.e. approximately 4416A) is transmitted by mirror 30, the beam being utilized by external apparatus such as for the scanning purposes as set forth hereinabove. Typical dielectric materials include $SiO_2$, $TlO_2$ among others.

As set forth hereinabove the cadmium reservoir is selected to provide a controllable laser output beam over a broad range of ambient temperatures e.g. 60°F to 120°F. The cathodes are low cost directly heated barium strontium oxide cathodes typical of those utilized in flourescent lamps. The cathodes are thermally and chemically compatible with the laser tube and capable of providing the required discharge currents, typically in the range from about 20 ma to about 150 ma. The cathode end mirror 66 is protected by utilizing the diffusion confinement section 60 comprising the glass baffle 62 and tube 64, each of these elements providing diffusion confinement effects near the cathode end of the laser tube whereas anode end mirror 30 is protected by utilizing both cataphoretic and diffusion confinement sections 24 and 34, respectively, adjacent the anode end of the laser tube 10.

-25-

In the preferred embodiment, a few grams, typically 10-15 grams, of cadmium metal is inserted into reservoir 18 via tubulation 26. A heater 50 is provided to vaporize the cadmium to a preselected pressure and control the vapor pressure of the cadmium as described hereinabove. It should be noted that the heat of the discharge generated between the anode and cathode may also cause vaporization of the cadmium.

Helium gas is introduced into envelope 12 at a preselected pressure (approximately 4.0 Torr) employing vacuum processing equipment and helium fill tubulation 320. A solid cadmium charge 25 is deposited in reservoir 18 and tubulation 26 is sealed off prior to laser tube operation.

The operation of tube 10 is initiated by first heating the selected cathode filament 76 or 78 by applying e.g. 4 volts at 2 amperes via transformer 120 thereto, thereafter providing a high voltage via a source (not shown) of sufficient duration (2 to 5 microseconds) and amplitude (typically 20 kilovolts) between the anode 32 and the selected cathode electrode to cause the intervening gas to ionize. An external discharge power supply circuit 128 (Figure 5) is then applied to the tube 10 to maintain electrical current in the discharge capillary tube 14 constant at a value determined by the tube design and selected to provide optimum intensity (output power). The cadmium reservoir control heater 50 is energized by applying approximately 50 watts thereto to heat and evaporate the stored cadmium until the tube begins to lase. Preferably, the cadmium temperature is maintained at approximately 280°C, corresponding to its desired vapor pressure.

The discharge initiated between anode electrode 32 and cathode structure 52 via the current supply 128 excites the helium atoms to an energy state from which energy is imparted to the vaporized cadmium atoms. This causes the cadmium to be ionized and to be excited to
the required energy levels required for lasing action.
The ionized cadmium atoms are then transported along
the length of the discharge confining bore tube 14 to
cathode 78 (the selected cathode shown in Figure 5) via
the process of cataphoresis in a manner well known in
the art. When the excited ionized cadmium atoms return
to a lower energy state, laser radiation at 4416A (blue)
is produced. Since the voltage drop across the laser
tube 10 is inversely related to the cadmium vapor pressure,
the system is self regulating once a proper cadmium
temperature is established with the current from power
supply 128. The cadmium vapor condenses as condensate
70 in the region 93 due to the cooler tube operation
thereat. Note that a layer of insulation 322, such as
abestos, may be provided around a portion of the laser
envelope 12 to restrict the area of cadmium condensation
between member 20 and member 68 (cadmium vapor may condense as condensate 70' in that region).

The cadmium vapor is distributed in capillary
tube 14 near cathode structure 52 by cataphoretic pumping.
In order to inhibit the cadmium vapor from condensing
on mirror 66 due to the diffusion properties of cadmium
atoms, capillary tube 64 is provided with a sufficient
length (typically  25 mm) such that substantially all
of the cadmium vapor will condense before reaching mirror
66. On the anode end of the laser tube assembly, a
cataphoretic confinement section 24 inhibits cadmium
ions from depositing on mirror 30 while diffusion section
34 also inhibits any cadmium atoms diffusing towards
mirror 30 from condensing on the mirror. It should be
noted that a small amount of cadmium vapor will be near
the laser mirrors but the heat of the discharge heats
the mirrors and the surrounding structure such that condensation on the mirrors does not occur. The voltage
feedback control circuit, described hereinabove, senses the laser tube voltage and controls the amount of power dissipated in heater 50 to provide substantially constant laser output since laser output is dependent, inter alia, on the cadmium vapor pressure.

To further define the specifics of the present invention, the following examples are intended to illustrate and not limit the particulars of the present system. Parts and percentages are by weight unless otherwise indicated.

I.  A glass envelope 12 having an optical resonant cavity spacing (mirror to mirror) in the range from 30cm to about 60cm and a diameter of 3.5cm fabricated of borosilicate glass is provided with integral mirrors having a diameter of 15mm at opposite ends sealed to the tube envelope with a hard glass frit seal more specifically defined in U.S. application Serial No. 552,396. An anode comprised of Kovar, an iron-nickel-cobalt alloy is provided at one end of the tube, a pair of cathodes comprised of direct heated Ba Sr O filaments is provided at the other. A cadmium reservoir containing at least 10 gms and having a capacity of about 5cm$^3$ is provided in close proximity to the anode along with cataphoretic confinement and diffusion confinement sections. A diffusion confinement section is located in close proximity to the cathode. Both the diffusion and the cataphoretic confinement section are employed to inhibit the cadmium vapor from reaching the mirrors at opposite ends of the tube. The discharge tube is coaxially mounted in the gas envelope which communicates between the anode and the cathode having an inside diameter of 1.9mm and a tube wall thickness of 3mm being fabricated or borosilicate glass. An appendage 160 is fabricated as part of the tube envelope 12 and the prefabricated helium pressure regulator 148 is joined thereto via appropriate flange members. Helium is filled into the gas envelope via tubulation 320 using conventional techniques and the helium is maintained at a substantially constant pressure of 4 Torr by utilizing the helium pressure regulator and control circuitry as described hereinabove. A discharge is struck between the anode and the cathode employing conventional discharge ignition techniques and the discharge is maintained at approximately 100 milli-amps by current source 128. A resistive heater 50 wrapped around the cadmium reservoir is energized to provide cadmium vapor at a pressure about $10^{-2}$ Torr in the space of the reservoir which diffuses into the main capillary discharge tube 14 along with helium gas. The helium and cadmium atoms collide providing ionization and excitation of the cadmium and thereby providing for stimulated emission of the appropriate wavelength. Cadmium ion density is maintained with reasonable uniformity in the discharge tube as the cadmium ions flow from the cadmium reservoir towards the cathode by cataphoresis. Thus, continuous wave blue light is emitted at 4416A measured by spectroscopic means. Baffle member 68 minimizes the gettering of helium by the cadmium condensate 70 since the cadmium condensate 70 is not affected by the electric field at the selected cathode 76 or 78.

II. The procedure as outlined in Example I is again performed with the exception that helium pressure is a 5 Torr and the cadmium is $10^{-1}$ Torr.

III. The procedure as outlined in Example II is again performed with the exception that the cadmium pressure is $10^{-2}$ Torr.

IV. The procedure as outlined in Example 2 is again performed with the exception that the cadmium pressure is $10^{-3}$ Torr.

V. The procedure as outlined in Example 1 is again performed with the exception that the helium pressure is 7 Torr and the cadmium pressure is $10^{-1}$ Torr.

VI. The procedure as defined in Example 1 is again performed with the exception that the helium pressure is 7 Torr.

VII.  The procedure as defined in Example 1 is again performed with the exception that the helium pressure is 7 Torr and the cadmium pressure is $10^{-3}$ Torr.

VIII-XV.  The procedure as outlined in Example 1 is again performed with the exception that the discharge current is employed at 50, 60, 70, 80, 90, 110, and 120 milliamperes.

It should be noted that although the technique for introducing high pressure helium within glass envelope 12 to compensate for helium pressure loss has been described with specific reference to helium-cadmium lasers, the technique can also be adapted for utilization in gas lasers wherein there may be substantial gas depletion during tube operation or shelf times, such as, for example, in helium-selenium, helium-neon, krypton and xenon lasers.

CLAIMS:

1.      A gas laser characterised by the provision of
a controllable source of gas for releasing the gas into
the laser so as to increase the pressure in the laser in
response to a fall in pressure therein below a predetermined
pressure.

2.      A laser as claimed in Claim 1 including means
for generating a signal when the pressure falls below the
predetermined pressure, and means responsive to the signal
to control the source.

3.      A laser as claimed in Claim 2 in which the signal
generating means comprises thermistors within the laser.

4.      A laser as claimed in any one of Claims 1 to 3
in which the controllable source is such as to increase
the pressure in the laser to a second pressure greater than
the predetermined pressure.

5.      A laser as claimed in any one of Claims 1 to 4
in which the controllable source includes a reservoir of
the gas which is at a higher pressure than the predetermined
pressure or the second pressure and which is separated from
the gas in the laser by a temperature-sensitive gas-permeable
member, and including a heater for the member.

6.       A laser as claimed in Claim 5 in which said gas-permeable member is of glass.

7.       A laser as claimed in any one of Claims 1 to 6 in which the operative material within the laser comprises the gas, and a metal vapour.

8.       A laser as claimed in Claim 7 in which the gas is helium and the metal is cadmium.

FIG. 1

FIG. 1A

0004190

FIG. 2

FIG. 3

FIG. 4

FIG. 5

FIG. 6

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 3 614 658 (J.P. GOLDS-BOROUGH)<br><br>* Column 2, line 57 - column 3, line 17, figures 1-2 *<br><br>-- | 1,2,7,8 | H 01 S 3/13<br>3/03 |
| X | US - A - 3 876 957 (J.B. THATCHER)<br><br>* Column 4, line 29 - column 5, line 60; figure 4 *<br><br>-- | 1,2,4-6 | |
| | FR - A - 2 112 134 (C.G.G.)<br><br>* Page 1, line 20 - page 2, line 4, page 3, lines 6-35; figures *<br><br>-- | 1,2,7,8 | TECHNICAL FIELDS SEARCHED (Int.Cl.³)<br><br>H 01 S 3/13<br>3/03<br>H 01 J 61/24<br>61/28 |
| | DE - A - 2 030 421 (SIEMENS)<br><br>* Page 1, last paragraph; page 2 *<br><br>-- | 1,5-8 | |
| | FR - A - 1 114 822 (THOMSON-HOUSTON)<br><br>* Page 2, left-hand column, last two paragraphs; figure 2 *<br><br>-- | 3 | |
| | JOURNAL OF PHYSICS E, Scientific Instruments, vol. 5, no. 5, Mai 1972<br>London GB<br>D.T. LLWELELYN-JONES et al. : "Stabilisation of the HCN laser", pages 468-472.<br><br>* Page 468, right-hand column, second paragraph; figure 1 */ | 1 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | | | |
|---|---|---|---|
| | The present search report has been drawn up for all claims | | |
| Place of search | Date of completion of the search | Examiner | |
| The Hague | 22-06-1979 | BORMS | |

EPO Form 1503.1  06.78

**European Patent Office**

**EUROPEAN SEARCH REPORT**

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| A | FR - A - 1 527 988 (C.G.E.)<br>  * Page 2, figures *<br><br>-- | 1 | |
| A | US - A - 2 582 282 (J. ROTHSTEIN)<br>  * Column 1, line 50 - column 2, line 2, column 2, line 51 - column 3, line 32; figure 1 *<br><br>-- | 3,5 | |
| A | US - A - 3 566 304 (R.H. NEUSEL)<br>  * Column 1, lines 33-67; figures *<br><br>---- | 1,2 | TECHNICAL FIELDS SEARCHED (Int. Cl.²) |

EPO Form 1503.2  06.78